# EUROPEAN PATENT APPLICATION

(11) **EP 1 574 131 A1**
(43) Date of publication of application: **14.09.2005**
(21) Application number: 05380020.7
(22) Date of filing: 04.02.2005
(51) Int. Cl.: A01K 25/00

(54) **Anti-stress muzzle**

(30) Priority: 06.02.2004 ES 200400262 U
(71) Applicant: Lopez Candil, Enrique, (Barcelona) (ES)
(72) Inventor: Lopez Candil, Enrique, (Barcelona) (ES)
(74) Representative: Manresa Val, Manuel

(57) **Abstract**

Comprises two concave pieces (1,2) one upper and one lower, between both of them, the muzzle and mouth of an animal is covered except for a lower opening (14) and which they are joined to each other by means that allow a certain opening and closure of the same ones, in accordance with the movements done by the animal's jaws, and is characterized in that said means of opening and closure are constituted by two points of joint (4), applied respectively to each flank of the muzzle, joining a lateral of one of the pieces (1) with the corresponding one of the other piece (2), having been foreseen means for recuperation with a tendency to the initial closed position of said pieces (1,2) being fixed, said means for recuperation (8), to a point (10) of upper piece (1) and, to a point (12) of the lower piece (2).

## Description

Anti-stress muzzle, that comprises two concave pieces one upper and the other one lower, between both of them, the muzzle and mouth of an animal is covered except for a lower opening and which they are joined to each other by means that allow a certain opening and closure of the same ones, in accordance with the movements done by the animal's jaws, that is characterized in that said means of opening and closure are constituted by at least two points of joint, as semiaxes, applied respectively to each flank of the muzzle, joining a lateral of one of the pieces with the corresponding one of the other piece, having been foreseen means for recuperation with a tendency to the initial closed position of said pieces being fixed, said means for recuperation, on the one hand, to a point of the upper piece and, on the other hand, to a point of the lower piece.

### BACKGROUNDS OF THE INVENTION

Obviously muzzles for animals are well known in the state of the art, those that often are made of a set of belts forming a cage, in such a way that closes the nose of the animal preventing that this one can attack, it means, to bite to people or other animals.

Such muzzles that close the nose of the animal, including in a relatively way, produce stress and nervousness to the same animal when it can not move the jaws nor to stick the tongue; when it wants to drink or eat, its owner must untie it and take out the muzzle and later to put the muzzle to the animal and to fasten it with the consequent nuisance.

It is known the Spanish Utility Model Application No. 200201414 (ES1052273) of the same applicant which describes an anti-stress muzzle that includes two faced surfaces, one upper and another lower, that surround at least a part of the nose and mouth of the animal, preferably a dog; a slide guide with a predetermined minimum and maximum path, that joins both two faced surfaces; and joint means of the mentioned muzzle with the body of the animal. The referred surfaces are adjustable in order to adapt the size of the mouth and nose of the animal with the muzzle including an opening, in the lower surface, with a size enough to be able to stick the animal's tongue out and drink water. Also the muzzle includes several opening - air holes

### BRIEF DESCRIPTION OF THE PATENT

The object of the present invention refers to an improved anti-stress muzzle, specially, although not exclusively, for dogs.

With the present muzzle, it has been developed a new muzzle that completes the existing range in the sector, started with the utility model above mentioned in the name of the same applicant, that keeps the nose of animal duly covered and at the same time does not stress the animal.

In this invention it has been substituted the mentioned slide track that joined both upper and lower surfaces or pieces by a joint at each side of the muzzle that also allows to open and to close both pieces or surfaces when the same animal opens and closes the mouth.

In addition incorporates a first elastic means or means for recovering that have the tendency to keep said upper and lower pieces with their minimum path of the joint, for this reason both mentioned pieces keep always with the opening fitted to the opening (or closure) of the mouth of the animal.

Finally incorporates a second elastic means, fixed to a hook, that facilitate the positioning of the muzzle in the animal. Initially this muzzle is stretched towards the outside, and at the same time the back part of the skull of the animal with said second elastic means becomes involved, in such a way that when the animal foresees it the muzzle is left fitting it to the nose by means of the second elastic means.

In addition, and in order to facilitate the breathing of the animal, it has left duly opened the area that corresponds to the nose, as well as openings have been made, in the lower frontal half, to improve the ventilation of the animal through the mouth.

All of the above as it is widely explained in the following description.

### BRIEF DESCRIPTION OF THE DRAWINGS

With the purpose to facilitate the explanation two sheets of drawings are attached to the present description, in which a practical case of an embodiment has been reproduced, which is mentioned only for exemplificative, non limitative of the scope of the present invention:
- figure 1 is a lateral view of the present muzzle on closed position,
- figure 2 represents another lateral view, similar to the previous one, but sectioned and illustrating the inner part of the same muzzle that now is on opened position, and
- figures 3 and 4 illustrate respective front views of the present muzzle with respective variations that, in any case, do not change the essence of the invention.

### CONCRETE EMBODIMENT OF THE PRESENT INVENTION

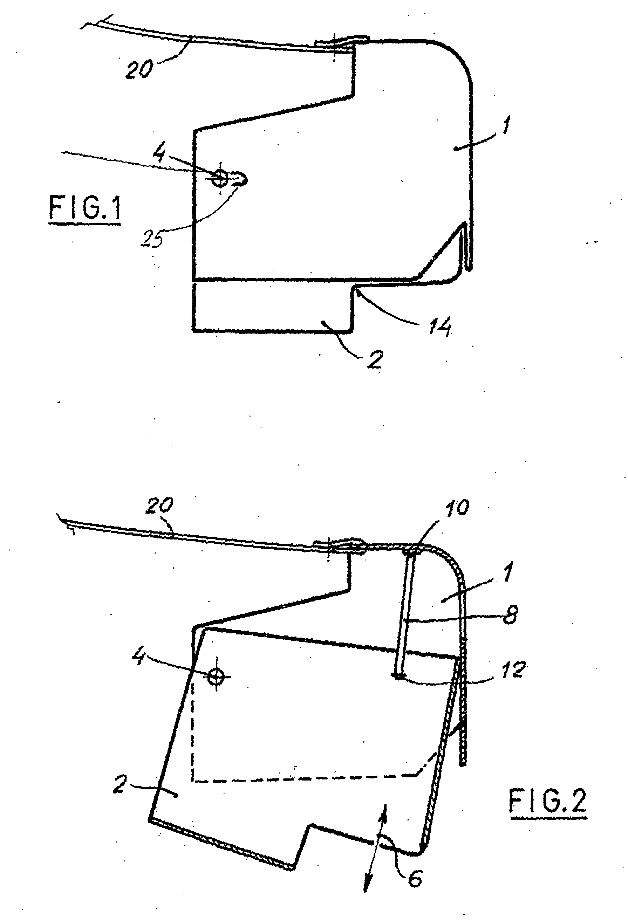

According to such figures (figs. 1 and 2) the improved muzzle object of the present invention comprises, mainly, two pieces 1, 2 as concave surfaces for the upper and lower part respectively of the nose and mouth of the animal, as concave pieces 1, 2 they are joined jointly by two lateral points 4, as semiaxes, that allow a certain angular movement (suggested by double arrow 6) in agreement with the movement of the animal's jaws or dog.

Besides of the lateral points of joint 4, it is necessary to emphasize in the present application the elastic ties 8 or ties with recuperation nature, one of whose ends it is fixed to upper inner part 10 of the upper concave piece 1, whereas by its opposed end, said ties 8 are fixed to a lateral point 12 of the lower concave piece 2. With it, it will be understood that after opening the mouth, when the same animal closes the mouth, said lower piece will return up as a consequence of the ties 8, to the starting point, and following always said inner piece 2 the jaw movements of the dog.

Said ties 8 can also be fixed elsewhere of the inner part of the upper concave part 1, different one from the upper part of the referred piece. In the same way the mentioned ties 8 can be also fixed elsewhere of the inner part of the lower concave part 2, different from the lower part of the referred piece. That is to say, referred ties 8 could be fixed, for example, to the laterals of the upper concave part 1 and to the lower concave part 2. This allows a maximum adaptability depending on the nose of the animal.

In any case, lower piece 2 has an opening 14 so that the animal, at least, can stick out the tongue.

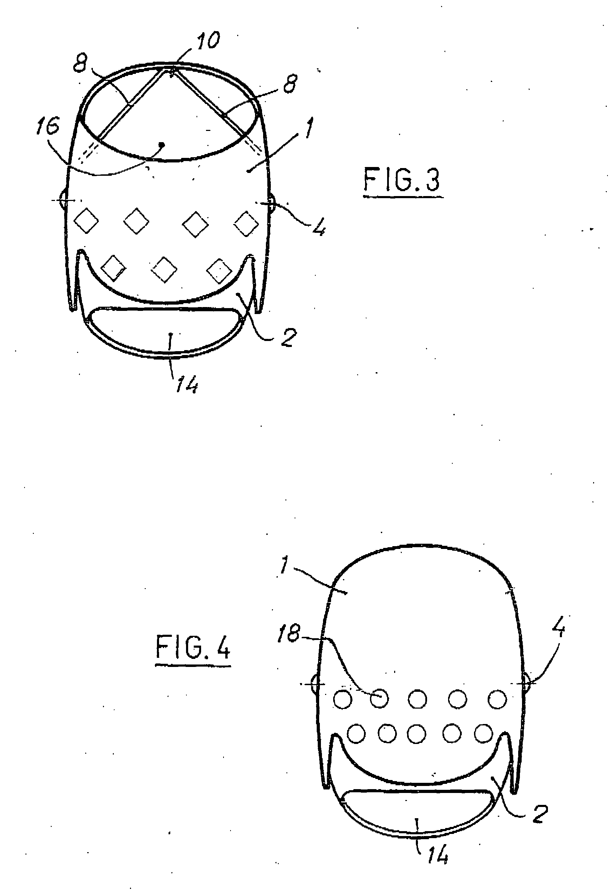

Also it has been foreseen means for breathing that, in figures 3, is constituted by a great opening 16 as a gap near to the front upper part of the upper piece 1 and holes 18 in the lower half of the upper piece, for example similar to a rhombus; according to the figure 4, such means for breathing will be constituted by several holes 18, for example, circular.

In order to place the muzzle in the animal's nose, it has been foreseen second elastic means 25, fixed to a hook. The hook is fixed to the lateral points of joint 4. Later this muzzle stretches towards the outside, whereas the referred second elastic means 25 surround the back part of the skull of the animal, in such a way that when the animal can not expect it, the muzzle is left, that by action of the second elastic means 25 is fitted in the nose of the animal.

The muzzle is completed with a conventional strap 20 in order to control the animal and with strips or means (not represented) for fixation of the muzzle of to animal's head, preferably behind the ears.

The present patent describes an anti-stress muzzle. The examples mentioned here are not limitative of the present invention, for that reason it will be able to have different applications and/or be adapted, all of them within the scope of the following claims.

## Claims

1. Anti-stress muzzle, that comprises two concave pieces (1,2), one upper and the other one lower, between both of them, the muzzle and mouth of an animal is covered except for a lower opening (14) and which they are joined to each other by means that allow a certain opening and closure of the same ones, in accordance with the movements done by the animal's jaws, **characterized in that** said means of opening and closure are constituted by at least two points of joint (4), as semiaxes, applied respectively to each flank of the muzzle, joining a lateral of one of the pieces (1) with the corresponding one of the other piece (2), having been foreseen means for recuperation with a tendency to the initial closed position of said pieces (1,2) being fixed, said means for recuperation (8), on the one hand, to a point (10) of the upper piece (1) and, on the other hand, to a point (12) of the lower piece (2).

2. Muzzle in accordance with claim 1 **characterized in that** the referred means for recuperation (8) consist of at least an elastic tie.

3. Muzzle in accordance with claim 2 **characterized in that** the mentioned point (10), of the upper piece (1) is located in the upper part of the referred piece.

4. Muzzle in accordance with claim 2 or 3 **characterized in that** the mentioned point (12), of the lower piece (2) is located in the inferior part of the referred piece.
